# FASCICULE DE BREVET EUROPEEN

(11) **EP 2 315 642 B1**
(45) Date de publication et mention de la délivrance du brevet: **13.06.2018**
(21) Numéro de dépôt: 09737070.4
(22) Date de dépôt: 16.07.2009
(51) Int. Cl.: B23P 6/00, F01D 5/00

(54) **PROCEDE DE REPARATION OU DE REPRISE D'UN DISQUE DE TURBOMACHINE**
VERFAHREN ZUM REPARIEREN ODER NACHBEARBEITEN EINER TURBOMASCHINENROTOR
METHOD OF REPAIRING OR REWORKING A TURBOMACHINE DISK

(30) Priorité: 18.07.2008 FR 0854906
(43) Date de publication de la demande: 04.05.2011
(73) Titulaire: Safran Aircraft Engines, 75015 Paris (FR)
(72) Inventeur: GIGNOUX, Hervé, 77000 Vaux le Penil (FR); GVOZDENOVIC, Eric, 77154 Coutencon (FR); LORO, Gaël, 77380 Combs la Ville (FR); BASSOT, Alain, Jacques, Michel, 77590 Bois Le Roi (FR)
(74) Mandataire: Gevers & Orès
(86) Numéro de dépôt international: PCT/FR2009/051416
(87) Numéro de publication internationale: WO 2010/007323

(56) Documents cités:
- EP-A- 0 263 713
- EP-A- 1 445 426
- EP-A- 1 462 664
- EP-A- 1 503 039
- EP-A- 1 589 189
- FR-A- 2 922 588
- US-B1- 6 447 250

## Description

La présente invention concerne un procédé de réparation ou de reprise de pattes d'accrochage radiales sur la jante de disques de turbomachines selon le préambule de la revendication 1. Un tel procédé est décrit dans le document EP 1 462 664 A2. Elle vise en particulier les oreilles, et plus particulièrement les oreilles dites centrales, de retenue de plateformes inter-aubes sur un disque de soufflante dans un turboréacteur multiflux.

Un turboréacteur à double flux connu, tel qu'appartenant à la famille des CFM 56, comprend une soufflante avant entraînée par la turbine basse pression du générateur de gaz associé. Le disque de soufflante comprend une jante en périphérie dans laquelle sont usinées des alvéoles à orientation sensiblement axiale et qui est solidaire en aval d'un tambour de compresseur basse pression pour le flux primaire alimentant le générateur de gaz. Le disque et le tambour forment le module de compresseur basse pression. Les alvéoles sont à section transversale en queue d'aronde et servent de logements aux pieds des aubes de soufflante. La jante supporte également des plateformes inter aubes qui délimitent la paroi radialement intérieure de la veine du flux d'air traversant la soufflante. Les termes : axial et radial, intérieur et extérieur, amont et aval, sont définis, dans le présent texte, par rapport à l'axe du moteur sur lequel sont montées les différentes pièces désignées et à la direction du flux gazeux qui traverse celui-ci.

Chaque plateforme comprend une plaque de forme allongée qui s'appuie latéralement sur les aubes de soufflante adjacentes avec, sur sa face intérieure, des moyens de fixation à la jante et au tambour formés de pattes radiales intérieures percées chacune d'un alésage axial. La jante et le tambour comprennent des moyens de fixation des plateformes formés de pattes radiales traversées par des pions axiaux et dont une tête est en saillie par rapport à la patte traversée. Plus précisément les plateformes sont centrées et retenues par les moyens de fixation en trois points de fixation sur le module de compresseur basse pression. Deux de ces points de fixation sont situés sur le disque de soufflante, le troisième, en aval se trouvant sur le tambour basse pression. Les pattes radiales intérieures des plateformes sont glissées sur les têtes des pions qui sont solidaires du rotor.

Un exemple d'agencement de rotor de soufflante avec des plateformes inter aubes retenues par des pattes radiales intérieures sur un disque de soufflante, en trois points de fixation dont un disposé centralement entre un moyen de retenue amont et un moyen de retenue aval est décrit dans le brevet US 6.447.250.

En fonctionnement du moteur les zones de retenue des plateformes subissent d'importants efforts radiaux.

Le présent déposant a décrit dans le brevet EP 1.503.039 une plateforme inter-aubes pour un disque de soufflante de turboréacteur munie d'au moins une première patte de fixation pourvue d'un orifice pour le passage d'un pion de fixation destiné à la lier à une seconde patte de fixation du disque ; le pion de fixation comprend une tige avec une portion filetée présentant un premier diamètre et une seconde partie comprenant une collerette prolongeant la première partie, présentant un deuxième diamètre supérieur au premier diamètre, et destinée à être intercalée entre les première et seconde pattes de fixation, et une tête prolongeant la première sous-partie et présentant un troisième diamètre inférieur au deuxième diamètre de manière à pouvoir passer au travers de l'orifice de la première patte de fixation. Un tel agencement permet de mieux répartir les charges entre les pions et les pattes de fixation. Cependant, il nécessite une modification de la géométrie des pièces actuellement exploitées et ne permet pas une substitution avec ces dernières. En outre ce document ne divulgue ni ne suggère aucun procédé de réparation.

Dans un type de moteur, les pions comprennent une tête et une tige avec une portion filetée. La tête présente un épaulement en appui contre la face amont de la patte radiale extérieure de la jante. La force d'appui de la tête conte la surface résulte du serrage d'un écrou vissé sur la tige à portion filetée contre la face opposée. On constate que la zone de fixation centrale entre la patte de fixation radiale extérieure sur la jante disposée entre les moyens de fixation amont et aval, et la patte de fixation centrale radialement interne de la plateforme est susceptible d'usures et d'amorces de fissure. On explique ces dommages par les micro déplacements du pion de retenue en fonctionnement. Ce pion est glissé dans l'alésage de la patte radiale extérieure de la jante et comme mentionné ci-dessus y est maintenu par vissage. Cependant l'effort de serrage du pion est limité à la tenue mécanique de la section travaillante. Les efforts centrifuges en fonctionnement peuvent surpasser le serrage et induire lesdits déplacements. Ces derniers génèrent une usure de la patte à l'endroit où la tête du pion est en contact et prend appui sur celle-ci. De plus, on a constaté des fissures dans la patte, à l'entrée de l'alésage accueillant le pion de retenue.

Le déposant s'est fixé comme objectif la mise au point d'une méthode de réparation de disques de turbomachines pourvus de pattes radiales extérieures avec pion de retenue de pièces telles que des plateformes inter aubes et présentant ce type d'usures et ou de fissures.

Conformément à l'invention, un procédé de réparation d'un disque de turbomachine suivant les caractéristiques de la revendication 1 est proposé. Des modes de réalisation préférés du procédé sont décrits dans les revendications dépendantes. Le procédé de l'invention permet non seulement de réparer sans avoir à modifier l'agencement des pièces, ce que n'enseigne pas EP 1.503.039 mais aussi d'améliorer la tenue à l'usure en prévoyant des surfaces de contact élargies.

Compte tenu de la présence de fissures, le procédé comprend également l'élargissement de l'alésage par usinage de manière à supprimer la matière fissurée. Conformément à un mode de réalisation de l'invention l'élargissement est de l'ordre de 25%. Le pion de remplacement présentant une tige à portion filetée de diamètre supérieur à celui du pion de retenue initial et correspondant à celui du nouvel alésage. La tige comprend une partie lisse et une partie filetée. La partie lisse guide le pion dans l'alésage sur toute sa longueur et son diamètre est ajusté à celui de l'alésage pour assurer un contact glissant.

En augmentant le diamètre de la tige à portion filetée, on autorise un serrage plus important du pion par l'écrou. De ce fait les efforts centrifuges n'induisent pas de déplacement latéral des pions en fonctionnement.

En raison de l'amélioration de la tenue à l'usure et à la fatigue, le présent procédé peut être mis en oeuvre pour une reprise des pattes de retenue radiale sur un disque neuf ou avant que l'on constate un quelconque des dommages ci-dessus mentionnés. L'objectif est alors d'augmenter le potentiel en durée de vie du disque. Cette augmentation est substantielle, de l'ordre de 50%;

On usine selon les moyens à disposition et les conditions d'apparition des zones frettées et fissurées, un lamage en forme de U débouchant sur le bord extérieur de la patte de fixation extérieure ou bien un lamage en forme de L débouchant sur les bords extérieur et latéral de la patte ou encore un lamage de forme circulaire autour de l'alésage de la patte.

Bien que l'invention s'applique à toutes les situations présentant les mêmes problèmes, elle trouve plus particulièrement application à la patte centrale de retenue d'une plateforme inter aubes dans un disque de soufflante de turboréacteur. Un disque de turbomachine obtenu après réparation ou bien par reprise comporte sur sa jante au moins une patte de fixation radiale extérieure pourvue d'un pion axial comprenant une tête en appui sur une première face de la patte et une tige à portion filetée sur laquelle est vissée un écrou de serrage sur la face opposée de la patte, caractérisé par le fait que la tête comprend une collerette de diamètre supérieur à celui de la tête elle-même, en appui sur ladite première face, la collerette étant contenue dans un lamage de la patte. Un rotor de soufflante de turboréacteur comporte un tel disque, des plateformes inter aubes comportant des pattes radiales intérieures retenues par lesdits pions.

La présente invention est décrite ci-après plus en détail, mais non limitativement, en référence aux dessins sur lesquels :
- la figure 1 représente en coupe axiale partielle un disque de soufflante conformément à un mode de fixation des plateforme conforme à l'art antérieur et non réparé ou repris ;
- la figure 2 représente une vue partielle en perspective du disque de la figure 1, seul sans les plateformes et les aubes;
- la figure 3 montre en perspective la mise en place d'un pion de retenue conventionnel;
- les figures 4a et 4b montrent la mise en oeuvre de la réparation conformément à l'invention;
- la figure 5 montre une variante de réalisation du lamage conformément à l'invention;
- la figure 6 montre une autre variante de réalisation du lamage conformément à l'invention.

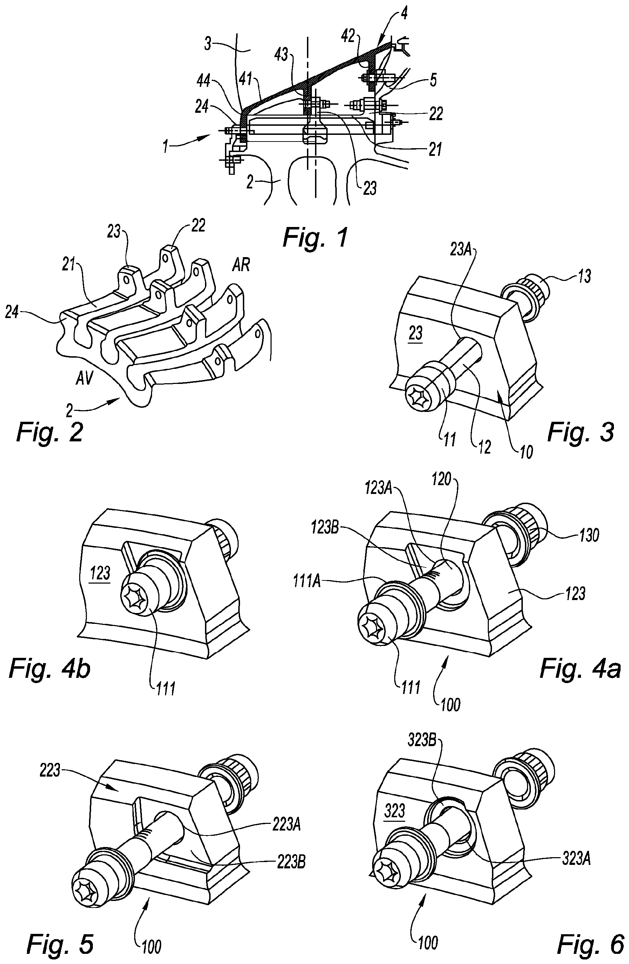

La figure 1 illustre un montage tel qu'utilisé présentement sur les moteurs en cours d'exploitation. Le rotor de soufflante 1 comprend un disque 2 sur la jante duquel sont logés les pieds des aubes de soufflante 3. Les logements sont constitués d'alvéoles de forme légèrement incurvée et orientées dans la direction axiale. Le disque 2 est solidaire par boulonnage au tambour 5 du compresseur de gavage. Les deux forment le module de compresseur basse pression. Entre les alvéoles, la jante forme des nervures 21 qui comprennent des pattes radiales tournées vers l'extérieur et situées dans un plan transversal par rapport à l'axe de la machine : une patte 22 en aval par laquelle le disque 2 est boulonné au tambour 5, une patte 23 radiale entre une face amont 24 du disque et le bord aval, et dite centrale. On voit cette partie de la jante du disque de soufflante en perspective sur la figure 2.

La plateforme 4 est disposée entre deux aubes adjacentes 3 et prend appui contre leurs faces latérales. La plateforme comprend une plaque 41 dont la face supérieure définit la paroi intérieure de la veine d'air traversant le rotor. La plateforme est inclinée de l'amont vers l'aval pour suivre la réduction de la section de la veine d'air. Trois pattes 42, 43 et 44, s'étendent radialement et transversalement depuis la face opposée de la plaque. Les pattes sont percées selon la direction axiale et assurent la fixation de la plateforme au rotor par engagement axial avec les moyens de fixation sur le disque. La patte 44 en amont est maintenue contre la face amont du disque par un boulon amont. La patte aval 42 est maintenue par un pion aval qui est solidaire de la face amont du tambour.

Entre les deux pattes amont et aval, la patte centrale 43 est maintenue radialement par un pion axial 10 qui est lui-même fixé par vissage. On voit sur la figure 3, le montage en cours d'un tel pion conventionnel sur la patte centrale 23 de la jante du disque. Le pion 10 comprend une tête 11 et une tige à portion filetée 12 que l'on glisse dans un alésage axial 23A usiné dans la patte centrale 23. Pour fixer le pion, on visse à l'aval l'écrou 13 sur la tige à portion filetée jusqu'à ce que l'épaulement de la tête 11 vienne en appui contre la face amont de la patte 23. Au montage de la plateforme, on positionne la patte 43 devant la tête 11 du pion et on l'engage et la glisse sur celle ci par son orifice en même temps que l'on engage la patte aval sur le pion aval.

Après une certaine durée de fonctionnement, on constate l'apparition de traces d'usure sur la face amont de la patte 23 qui reçoit l'épaulement du pion. Des fissures radiales apparaissent également en entrée de l'alésage.

Conformément à l'invention, pour réparer ces dommages ou éviter qu'ils ne surviennent, on usine un lamage sur la surface de la patte qui reçoit la tête du pion de retenue.

En référence à la figure 4a, on a représenté en perspective partielle une patte 123. Celle-ci est solidaire de la jante d'un disque de turbomachine non représenté. On a usiné un lamage 123B en forme de U sur la face de la patte de fixation 123 radiale. Il s'agit ici de la face amont de la patte centrale de retenue d'une plateforme sur la jante du disque de soufflante d'un turboréacteur. Le lamage débouche sur le bord supérieur libre de la patte 123.

Par ailleurs, dans la mesure où cela s'avère nécessaire, on usine l'alésage 123A pour en augmenter le diamètre. L'augmentation de diamètre a une double fonction, à savoir éliminer les zones fissurées ou susceptibles de voir apparaître les fissures et permettre la mise en place d'un pion dont la tige est de diamètre supérieur au pion initial et autorise un serrage plus important sur la patte de fixation 123. De plus, l'écrou comporte une base élargie par rapport à l'écrou initial, ce qui permet d'éviter un matage de l'écrou et une diminution de la durée de vie de la solution. La partie lisse de la tige à portion filetée et l'alésage sont assemblés « glissant juste » c'est à dire avec un jeu minimal entre eux, positif, de quelques microns par exemple.

Un pion 100 est en cours de montage sur la patte 123 dans l'alésage 123A. La tête 111 du pion est de diamètre supérieur à celui de la tige 120 qui est filetée au moins sur une partie de sa longueur. La tête 111 forme une collerette 111A à sa base de manière à augmenter la surface d'appui sur la patte 123. Le diamètre de la tête reste adapté quant à lui à l'alésage de la patte de fixation sur la plateforme à monter. L'épaisseur de la collerette est au plus égal, et de préférence égal, à la profondeur du lamage afin que la réparation n'influe pas sur les pièces adjacentes. La profondeur du lamage est limitée à une valeur qui n'entraîne pas de diminution significative de la durée de vie du disque par affaiblissement des pattes. Au delà de cette valeur, la perte serait supérieure au gain de DDV (durée de vie).

Sur la face opposée, un écrou est engagé sur la partie filetée de la tige pour assurer le serrage du pion sur la patte 123.

Sur la figure 4b, le pion 111 est monté. La tête avec sa collerette est en appui contre la face amont de la patte de fixation. L'épaisseur de la collerette et la profondeur de l'alésage sont prévues de telle façon que la collerette ne soit pas proéminente par rapport à la surface de la patte 123.

Sur la figure 5, on a représenté une variante de réalisation du lamage. Le lamage 223B est en forme de L et débouche sur le bord latéral de la patte, ici référencée 223, et sur le bord supérieur. Comme dans le cas précédent on usine l'alésage 223A le cas échéant.

Sur la figure 6, on a représenté une autre forme de réalisation de l'alésage. L'alésage 323B est de forme circulaire et forme un logement ajusté au diamètre de la collerette 111A du pion. Comme dans les cas précédents l'alésage 323A est usiné pour permettre le cas échéant la mise en place d'un pion dont la tige à portion filetée est de diamètre supérieur à celui du pion de retenu initial. L'assemblage est réalisé glissant juste

Le choix de la géométrie du lamage dépend de plusieurs facteurs dont la typologie du fretting et de la taille des fissures.

En résumé l'invention permet de :
- supprimer ou d'éviter la survenue de traces de fretting sur les faces sur lesquelles les pions prennent appui,
- éliminer ou éviter la survenue de zones fissurées en entrée d'alésage, et par le réalésage d'utiliser un pion de section travaillante plus importante si cela est nécessaire.

L'augmentation du diamètre du pion diminue à la fois le débattement sous chargement avec suppression du risque de fretting, et l'amplitude de contrainte avec augmentation de la durée de vie à initiation de la zone critique et réduction de la vitesse de propagation des criques.

## Revendications

1. Procédé de réparation ou de reprise d'un disque (2) de turbomachine comprenant sur sa jante au moins une patte radiale extérieure (23) avec un alésage axial (23A) de réception d'un pion axial (10) comprenant une tête (11) et une tige à portion filetée (12), le pion (10) étant glissé dans l'alésage (23A) de façon que la tête (11) vienne en appui sur une face de la patte (23) par serrage d'un écrou sur la tige à portion filetée (12) contre la face opposée de la patte (23), ledit pion (10) formant un moyen de retenue d'une patte solidaire d'une pièce rapportée sur la jante, **caractérisé par le fait que** le procédé comprend les étapes suivantes :
- on constate l'apparition de traces d'usure sur la face amont de la patte (23) qui reçoit la tête (11) du pion (10),
- on usine un lamage (123B; 223B; 323B), autour de l'alésage (123A; 223A; 323A), sur la surface de la patte (23) qui reçoit la tête (11) du pion (10) et qui correspond à la zone d'usure, de manière à réparer les dommages,
- on élargit l'alésage (123A ; 223A ; 323A) par usinage, de manière à supprimer la matière fissurée et à former un nouvel alésage, et
- on dispose un pion de remplacement (100) comprenant une collerette (111A) en appui sur la surface dudit lamage, de diamètre supérieur à celui de la tête (111), le pion de remplacement (100) présentant une tige avec une portion filetée (120) de diamètre correspondant à celui du nouvel alésage.

2. Procédé selon la revendication précédente, dont l'épaisseur de la collerette est au plus égale à la profondeur du lamage.

3. Procédé selon l'une des revendications précédentes, selon lequel l'élargissement est de l'ordre de 25%.

4. Procédé selon l'une des revendications précédentes, selon lequel on remplace l'écrou par un écrou comportant une embase élargie par rapport à l'écrou initial.

5. Procédé selon l'une des revendications précédentes, selon lequel on usine un lamage (123B) en forme de U débouchant sur le bord extérieur de la patte de fixation extérieure.

6. Procédé selon l'une des revendications 1 à 4, selon lequel on usine un lamage (223B) en forme de L débouchant sur les bords extérieur et latéral de la patte de fixation extérieure.

7. Procédé selon l'une des revendications 1 à 4, selon lequel on usine un lamage de forme circulaire (323B) autour de l'alésage de la patte de fixation extérieure.

8. Procédé selon l'une des revendications précédentes, selon lequel ladite patte de fixation extérieure (123; 223; 323) est la patte centrale de retenue d'une plateforme inter aube dans un disque de soufflante de turboréacteur.

## Patentansprüche

1. Verfahren zur Reparatur oder Wiederaufnahme einer Turbomaschinenscheibe (2), umfassend auf ihrer Felge mindestens einen äußeren radialen Fuß (23) mit einer axialen Bohrung (23A) zur Aufnahme eines axialen Zapfens (10), umfassend einen Kopf (11) und einen Bolzen mit gewindegeschnittenem Abschnitt (12), wobei der Zapfen (10) derart in die Bohrung (23A) geschoben ist, dass der Kopf (11) auf einer Seite des Fußes (23) durch Verschluss einer Schraubenmutter auf dem Bolzen mit gewindegeschnittenem Abschnitt (12) gegen die gegenüber liegende Seite des Fußes (23) zur Auflage kommt, wobei der Bolzen (10) ein Mittel zum Rückhalt eines Fußes bildet, fest verbunden mit einem Teil, der auf der Felge aufgesetzt ist, **dadurch gekennzeichnet, dass** das Verfahren die folgenden Schritte umfasst:
- Feststellen des Auftretens von Abnutzungsspuren auf der vorgelagerten Seite des Fußes (23), der den Kopf (11) des Zapfens (10) aufnimmt,
- Bearbeiten einer Absenkung (123B; 223B; 323B) um die Bohrung (123A; 223A; 323A) auf der Oberfläche des Fußes (23), der den Kopf (11) des Zapfens (10) aufnimmt, und der dem Abnutzungsbereich entspricht, um die Beschädigungen zu reparieren,
- Verlängern der Bohrung (123A; 223A; 323A) durch Bearbeitung, um das rissig gewordene Material zu ersetzen und eine neue Bohrung zu bilden, und
- Anordnen eines Ersatzzapfens (100), umfassend einen Kragen (111A), der auf der Oberfläche der Absenkung aufliegt, mit einem Durchmesser, der größer als derjenige des Kopfes (111) ist, wobei der Ersatzzapfen (100) einen Bolzen mit einem gewindegeschnittenen Abschnitt (120) mit einem Durchmesser aufweist, der demjenigen der neuen Bohrung entspricht.

2. Verfahren nach dem vorhergehenden Anspruch, wobei die Dicke des Kragens höchstens gleich der Tiefe der Absenkung ist.

3. Verfahren nach einem der vorhergehenden Ansprüche, wobei die Verlängerung im Bereich von 25 % liegt.

4. Verfahren nach einem der vorhergehenden Ansprüche, wobei die Schraubenmutter durch eine Schraubenmutter ersetzt wird, die eine verlängerte Basis mit Bezug auf die anfängliche Schraubenmutter umfasst.

5. Verfahren nach einem der vorhergehenden Ansprüche, wobei eine Absenkung (123B) in Form eines U bearbeitet wird, die auf dem äußeren Rand des äußeren Befestigungsfußes mündet.

6. Verfahren nach einem der Ansprüche 1 bis 4, wobei eine Absenkung (223B) in Form eines L bearbeitet wird, die auf dem äußeren Rand und dem seitlichen Rand des äußeren Befestigungsfußes mündet.

7. Verfahren nach einem der Ansprüche 1 bis 4, wobei eine Absenkung in runder Form (323B) um die Bohrung des äußeren Befestigungsfußes bearbeitet wird.

8. Verfahren nach einem der vorhergehenden Ansprüche, wobei der äußere Befestigungsfuß (123; 223; 323) der mittlere Rückhaltefuß einer Zwischenschaufelplattform in einer Turbodüsenmotor-Gebläsescheibe ist.

## Claims

1. Method for repairing or reworking a turbomachine disc (2) comprising on its rim at least one external radial lug (23) with an axial bore (23A) for receiving an axial pin (10) comprising a head (11) and a stem with a threaded portion (12), the pin (10) being slid in the bore (23A) so that the head (11) comes into abutment on one face of the lug by tightening a nut on the stem with a threaded portion (12) against the opposite face of the lug (23), said pin (10) forming a means of holding a lug secured to a part attached to the rim, **characterised by** the fact that the method comprises the following steps:
- the appearance of wear lines on the upstream face of the lug (23) that receives the head (11) of the pin (10) is noted,
- a countersink (123B; 223B; 323B) is machined around the bore (123A; 223A; 323A), on the surface of the lug (23) which receives the head (11) of the pin (10) and which corresponds to the wear zone, so as to repair the damage,
- the bore (123A; 223A; 323A) is widened by machining, so as to eliminate the cracked material and to form a new bore, and
- a replacement pin (100) is disposed, comprising a collar (111A) in abutment on the surface of said countersink, with a diameter greater than that of the head (111), the replacement pin (100) having a stem with a threaded portion (120) with a diameter corresponding to that of the new bore.

2. Method according to the preceding claim, wherein the thickness of the collar is no more than the depth of the countersink.

3. Method according to either of the preceding claims, according to which the widening is around 25%.

4. Method according to any of the preceding claims, according to which the nut is replaced with a nut comprising a base widened with respect to the initial nut.

5. Method according to any of the preceding claims, according to which a countersink (123B) in the form of a U emerging on the outside edge of the external fixing lug is machined.

6. Method according to any of claims 1 to 4, according to which a countersink (223B) in the form of an L emerging on the outside and lateral edges of the external fixing lug is machined.

7. Method according to any of claims 1 to 4, according to which a circular-shaped countersink (323B) is machined around the bore of the external fixing lug.

8. Method according to any of the preceding claims, according to which said external fixing lug (123; 223; 323) is the central lug holding an interblade platform in a turbojet-engine fan disc.
